# EUROPEAN PATENT SPECIFICATION

(11) **EP 3 564 583 B1**
(45) Date of publication and mention of the grant of the patent: **07.07.2021**
(21) Application number: 17887456.6
(22) Date of filing: 14.11.2017
(51) Int. Cl.: F23N 5/00, F23N 3/02, F23L 9/02, G01N 21/49, F23C 7/00, F23C 7/02, F23L 9/04

(54) **COMBUSTION DEVICE AND BOILER PROVIDED WITH SAME**
BRENNER UND DAMIT AUSGESTATTETER KESSEL
DISPOSITIF DE COMBUSTION ET CHAUDIÈRE DOTÉE DUDIT DISPOSITIF

(30) Priority: 28.12.2016 JP 2016255498
(43) Date of publication of application: 06.11.2019
(73) Proprietor: Mitsubishi Power, Ltd., Yokohama-shi, Kanagawa 220-8401 (JP)
(72) Inventor: KIYAMA Kenji, Yokohama-shi Kanagawa 220-8401 (JP); BABA Akira, Yokohama-shi Kanagawa 220-8401 (JP); KURAMASHI Koji, Yokohama-shi Kanagawa 220-8401 (JP); OCHI Kenichi, Yokohama-shi Kanagawa 220-8401 (JP); MINE Toshihiko, Yokohama-shi Kanagawa 220-8401 (JP); ONISHI Yasuhito, Yokohama-shi Kanagawa 220-8401 (JP); MIYAKE Seishi, Yokohama-shi Kanagawa 220-8401 (JP); SHII Takayuki, Yokohama-shi Kanagawa 220-8401 (JP)
(74) Representative: Henkel & Partner mbB
(86) International application number: PCT/JP2017/040994
(87) International publication number: WO 2018/123308

(56) References cited:
- EP-A1- 2 347 178
- EP-A1- 2 463 651
- WO-A1-2008/133051
- WO-A1-2016/157610
- JP-A- S6 131 816
- JP-A- S62 138 607
- JP-A- 2001 074 208
- JP-A- 2005 233 605
- JP-A- 2007 107 849
- JP-A- 2008 249 187
- JP-A- 2009 150 619
- JP-A- 2016 176 640
- US-A1- 2008 105 175
- US-A1- 2011 045 420

## Description

### TECHNICAL FIELD

The present invention relates to a combustion device and a boiler provided with the combustion device.

### BACKGROUND ART

It has been known that an unburnt component (unburned fuel) stays behind in a furnace of a boiler because fuel cannot be burned completely up to a furnace outlet due to shortage of air, shortage of mixture between the fuel and the air, etc. As the residual unburnt component is larger, efficiency of the boiler is lowered. Therefore, there is technology for adjusting a flow rate of primary air or secondary air to be fed into the furnace, so as to reduce the residual unburnt component.

For example, a multistage combustion method has been disclosed in JP S63-311020 A. In the multistage combustion method, fuel, primary air and burner secondary air are supplied to an upstream side of a furnace to thereby perform combustion, and additional air blowing portion secondary air is supplied to a downstream side of the furnace to thereby perform combustion of an unburnt component. In this method, a concentration distribution of oxygen or carbonic acid gas in a downstream side transverse section of the furnace is measured, and a supply direction and a flow rate of the additional air blowing portion secondary air are adjusted based on the distribution of the measured gas concentration.

EP 2 463 651 A1 discloses a system and method for analyzing the operation of a combustion system. According to one embodiment, a method can include receiving multiple CO measurements from respective CO sensors distributed within the combustion system, receiving multiple O2 measurements from respective O2 sensors distributed within the combustion system, and determining at least one operating condition of the combustion system based at least in part on CO indicated by the CO measurements relative to O2 indicated by the O2 measurements.

EP 2 347 178 A1 discloses a method and a device for monitoring the combustion of fuel in a power plant, in that a real concentration distribution of a substance in an associated combustion chamber is measured, the real concentration distribution is evaluated taking into account the combustion stoichiometry and the composition of the fuel is deduced on the basis of the evaluation.

### SUMMARY OF INVENTION

### TECHNICAL PROBLEM

In the method described in JP S63-311020 A, the distribution of the gas concentration in the downstream side transverse section of the furnace is grasped qualitatively. Therefore, for example, when the gas concentration in a central portion is higher than that in a peripheral portion, it is determined that combustion in the central portion is active. Consequently, the supply direction and the flow rate of the additional air blowing portion secondary air is adjusted based on the grasped information. However, the method described in JP S63-311020 A does not give any clear description about how to make specific adjustment or about a position for measurement of the gas concentration. For this reason, it is difficult to put the method described in JP S63-311020 A into practical use.

The present invention is to provide a combustion device which can specifically set a position for efficient gas concentration measurement to effectively suppress a residual unburnt component by a specific control method based on information about measured gas concentration to thereby improve efficiency of a boiler, and the boiler provided with the combustion device.

### SOLUTION TO PROBLEM

To achieve the foregoing object, the present invention provides a combustion device with the features of claim 1 including inter alia: a plurality of burners that are provided in a wall of a furnace disposed along a vertical direction and that supply fuel, primary air and burner secondary air into the furnace; a plurality of air supply ports that are provided on a vertical-direction upper side of the plurality of burners in the wall of the furnace and that supply air supply port secondary air into the furnace; a plurality of secondary air dampers that adjust flow rates of the air supply port secondary air; a measurement unit that measures gas concentration in a measurement area on a horizontal section of a furnace outlet portion positioned on a vertical-direction upper side of the plurality of air supply ports in the furnace; and a control device that has a circuit outputting flow rate control command values for adjusting openings of the plurality of secondary air dampers respectively; wherein: the plurality of air supply ports are divided into two or more groups; the measurement area is divided in advance into a plurality of divided areas associated with the divided groups correspondingly and respectively; and the control device outputs, to the plurality of secondary air dampers respectively, the flow rate control command values for the air supply port secondary air supplied to the air supply ports belonging to the groups associated with the divided areas correspondingly and respectively, based on deviations between an average value of gas concentration in the whole measurement area and values of gas concentrations in the respective divided areas of the measurement area.

### ADVANTAGEOUS EFFECTS OF INVENTION

According to the present invention, it is possible to suppress a residual unburnt component efficiently and effectively due to the aforementioned characteristics to thereby improve efficiency of a boiler. Incidentally, any problem, configuration and effect than the aforementioned ones can be made clear by description of the following embodiment.

### BRIEF DESCRIPTION OF DRAWINGS

[Fig. 1] A schematic view showing the configuration of a portion of a thermal power plant to which the present invention is applied.
[Fig. 2] A schematic perspective view showing an example of the configuration of a combustion device (a portion of a boiler) according to an embodiment of the present invention.
[Fig. 3] A schematic view showing the configuration of burners and air supply ports in a front wall side of a furnace, and a supply system of fuel and air into the furnace.
[Fig. 4] A graph showing the relation between O₂ concentration and an unburnt component.
[Fig. 5] A schematic view showing the relation between the configuration of a plurality of air supply ports and the configuration of a measurement area and a measurement method of O₂ concentration in the measurement area.
[Fig. 6] A conceptual view showing a control method of flow rates of air supply port secondary air supplied from the plurality of air supply ports.

### DESCRIPTION OF EMBODIMENT

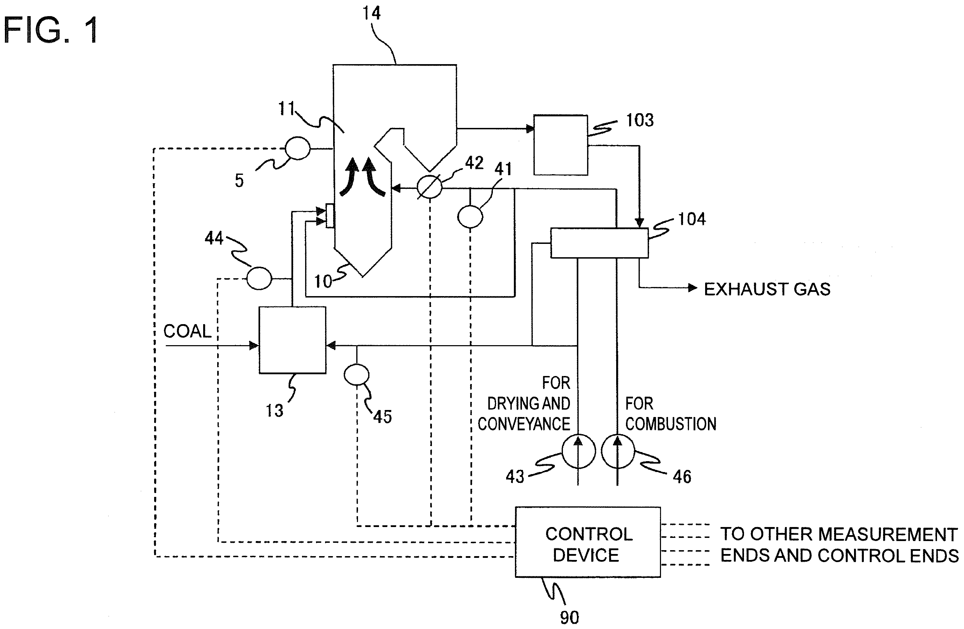

A combustion device 12 and a boiler 10 provided with the combustion device 12 according to an embodiment of the present invention will be described below with reference to FIG. 1 to FIG. 6.

### <Configuration of Boiler 10>

First, the configuration of the boiler 10 will be described with reference to FIG. 1 to FIG. 3.

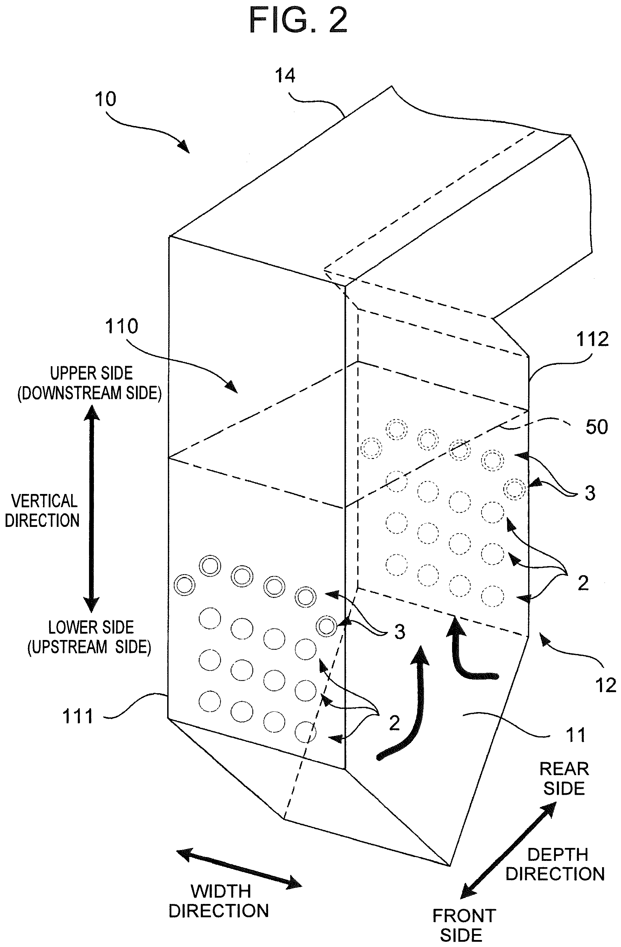

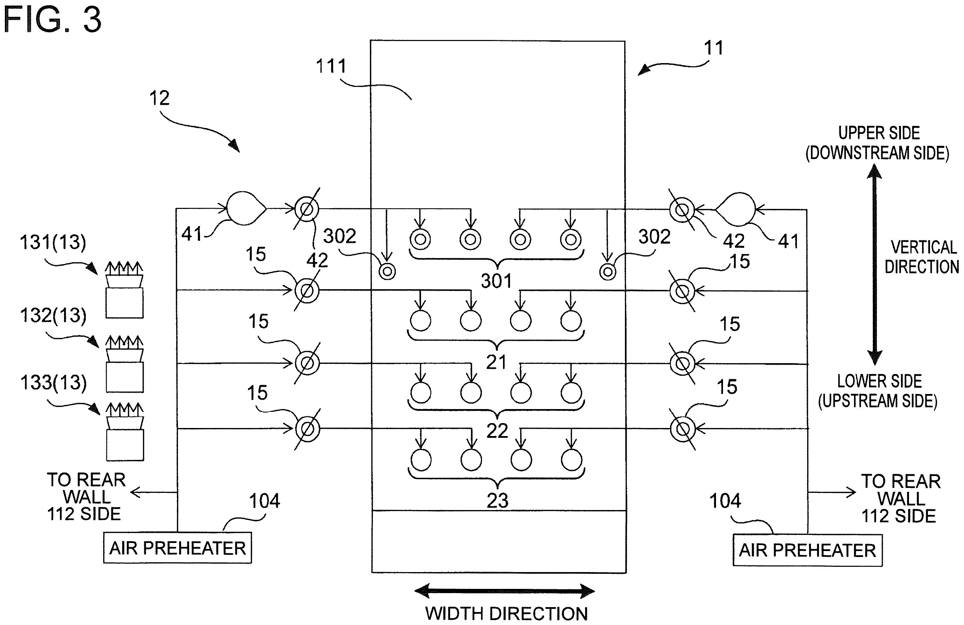

FIG. 1 is a schematic view showing the configuration of a portion of a thermal power plant to which the present invention is applied. FIG. 2 is a schematic perspective view showing an example of the configuration of the combustion device 12 (a portion of the boiler 10) according to the present embodiment. FIG. 3 is a schematic view showing the configuration of burners 2 and air supply ports 3 on a front wall 111 side of a furnace 11, and a supply system of fuel and air into the furnace 11.

The boiler 10 is a mode of a pulverized coal burning boiler used for the thermal power plant etc. The boiler 10 burns pulverized coal formed from coal such as bituminous coal, subbituminous coal, or the like, as solid fuel, and recovers heat generated thus. The pulverized coal is formed by pulverizing the coal by coal pulverizers 13. The boiler 10 is provided with the furnace 11 which is installed along a vertical direction, and the combustion device 12 which burns the pulverized coal in the furnace 11.

As shown in FIG. 2, the furnace 11 has a housing structure surrounded by a water-cooled wall constituted by a water-cooled pipe. A combustion space is formed inside the furnace 11. Combustion gas generated due to combustion of the pulverized coal in the combustion space of the furnace 11 flows upward from a vertical-direction lower side of the furnace 11, as designated by arrows of thick lines in FIG. 1 and FIG. 2. After the combustion gas discharged from the boiler 10 passes through a denitration device 103, air preheater 104 etc., the combustion gas is discharged as treated exhaust gas to the outside.

In the furnace 11, the vertical-direction lower side is an "upstream side" of the flow of the combustion gas, and a vertical-direction upper side is a "downstream side" of the flow of the combustion gas. Accordingly, a furnace outlet portion 110 is positioned on the vertical-direction upper side which is the downstream side of the flow of the combustion gas.

A flue 14 extending along a direction crossing (orthogonally intersecting) the furnace 11 is coupled to an upper portion of the furnace 11. Heat generated due to combustion in the furnace 11 heats and evaporates water mainly by radiation heat transfer to the water-cooled wall of the furnace. Further, steam superheated through heat exchange by a heat exchanger (not shown) such as a superheater, a reheater, or the like, provided inside the flue 14 is sent to a turbine to be fed for power generation.

Incidentally, in the following description, the extension direction of the flue 14 will be referred to as "depth direction"; the furnace 11 side in the depth direction will be referred to as "front side", and an opposite side to the furnace 11 side will be referred to as "rear side". In addition, a direction crossing (orthogonally intersecting) the vertical direction and the depth direction will be referred to as "width direction" (see FIG. 2).

The combustion device 12 is provided with a plurality of burners 2, a plurality of air supply ports 3, a plurality of secondary air dampers 42, a measurement unit 5, and a control device 90. The plurality of burners 2 supply pulverized coal, primary air and burner secondary air into the furnace 11. The plurality of air supply ports 3 supply air supply port secondary air into the furnace 11. The plurality of secondary air dampers 42 adjust flow rates of the air supply port secondary air. The measurement unit 5 measures gas concentration in a measurement area 50 (designated by a one-dot chain line in FIG. 2) on a horizontal section of the furnace outlet portion 110. The control device 90 has a circuit which outputs flow rate control command values for adjusting openings of the secondary air dampers 42 respectively.

In the combustion device 12, combustion air for burning the pulverized coal is divided into two stages and supplied. That is, the boiler 10 uses a two-stage combustion system in which the pulverized coal is completely burned in the two stages.

First, in the first stage, air whose amount is equal to or lower than a theoretical air amount required for completely burning the pulverized coal is supplied as the primary air and the burner secondary air from the plurality of burners 2 into the furnace 11 to burn the pulverized coal in a shortage state of air. Thus, nitrogen oxide (NOx) contained in the generated combustion gas can be reduced to nitrogen so that formation of the nitrogen oxide (NOx) in the furnace 11 can be suppressed. Next, in the second stage, air corresponding to the shortage for completely burning the pulverized coal is supplied as the air supply port secondary air from the plurality of air supply ports 3 into the furnace 11 to thereby accelerate combustion of an unburned combustible solid content which could not be burned completely but stay behind in the first stage, or an unburned combustible gaseous content such as generated carbon monoxide (CO).

Specifically, the primary air supplied from a primary air fan 43 and preheated by the air preheater 104 is guided to the coal pulverizers 13 in order to dry and convey the pulverized coal, and supplied from the burners 2 into the furnace 11 together with the pulverized coal pulverized by the coal pulverizers 13. Of the secondary air (combustion air) supplied from a secondary air fan 46 and preheated by the air preheater 104, one portion is supplied from the burners 2 to the furnace 11, and the remaining portion is supplied from the plurality of air supply ports 3 to the furnace 11.

Openings of dampers 15 are adjusted in accordance with damper opening control command values outputted from the control device 90 to thereby adjust (control) the flow rates of the burner secondary air supplied into the furnace 11 through the plurality of burners 2. The openings of the secondary air dampers 42 are adjusted in accordance with flow rate control command values outputted from the control device 90 to thereby adjust (control) the flow rates of the secondary air port secondary air supplied into the furnace 11 through the plurality of air supply ports 3.

The boiler 10 according to the present embodiment is an opposed combustion type boiler. As shown in FIG. 2, the plurality of burners 2 and the plurality of air supply ports 3 are provided separately in a front wall 111 and a rear wall 112 of the furnace 11 disposed oppositely to each other in the depth direction.

Specifically, twelve burners 2 and six air supply ports 3 are provided in each of the front wall 111 and the rear wall 112. The twelve burners 2 on the front wall 111 side and the twelve burners 2 on the rear wall 112 side are disposed in positions opposite to each other correspondingly and respectively. The burners 2 have one and the same configuration. In a similar manner or the same manner, the six air supply ports 3 on the front wall 111 side and the six air supply ports 3 on the rear wall 112 side are also disposed in positions opposite to each other correspondingly and respectively. The air supply ports 3 have one and the same configuration. Therefore, the configuration of the burners 2 and the air supply ports 3 on the front wall 111 side will be described below by way of example.

As shown in FIG. 3, the twelve burners 2 are disposed in three divided stages, i.e. an upper stage, an intermediate stage and a lower stage, from an upper side toward a lower side along the vertical direction. Four burners 2 are arranged side by side and disposed along a width direction in each stage. In the following description, the four burners 2 disposed in the upper stage will be referred to as "upper stage burners 21", the four burners 2 disposed in the intermediate stage will be referred to as "intermediate stage burners 22", and the four burners 2 disposed in the lower stage will be referred to as "lower stage burners 23".

The four upper stage burners 21, the four intermediate stage burners 22, and the four lower stage burners 23 are connected to a first coal pulverizer 131, a second coal pulverizer 132, and a third coal pulverizer 133, respectively.

For example, the first to third coal pulverizers 131 to 133 (the coal pulverizers 13) pulverize coal into pulverized coal with a particle size of about several tens of µm. The pulverized coal formed by the first coal pulverizer 131, the pulverized coal formed by the second coal pulverizer 132, and the pulverized coal formed by the third coal pulverizer 133 are guided to the four upper stage burners 21, the four intermediate stage burners 22, and the four lower stage burners 23 respectively through coal feeding pipes (designated by an upward arrow in FIG. 3) provided in upper portions of the coal pulverizers 13 by conveyance air, to be supplied into the furnace 11.

Operating patterns of the first to third coal pulverizers 131 to 133 change according to a working condition of the boiler 10. In accordance with this, use patterns (the operating patterns) of the upper stage burners 21, the intermediate stage burners 22 and the lower stage burners 23 change. For example, when all of the first to third coal pulverizers 131 to 133 are in operation, all the upper stage burners 21, the intermediate stage burners 22 and the lower stage burners 23 are in use. However, when the first coal pulverizer 131 and the third coal pulverizer 133 are in operation but the second coal pulverizer 132 stands by, the upper stage burners 21 and the lower stage burners 23 are in use but the intermediate stage burners 22 are not in use (stand by).

Incidentally, the use patterns of the burners 2 on the front wall 111 side and the use patterns of the burners 2 on the rear wall 112 side does not have to be always symmetric to each other correspondingly and respectively. For example, all three stages of upper stage burners 21, intermediate stage burners 22 and lower stage burners 23 on the rear wall 112 side may be not in use while two stages of the upper stage burners 21 and the intermediate stage burners 22 on the front wall 111 side are in use.

An amount of primary air and burner secondary air delivered from the air preheater 104 to each upper stage burner 21 is set based on an amount of pulverized coal conveyed from the first coal pulverizer 131 to the upper stage burner 21. As the burner secondary air, a flow rate of remaining air excluding the primary air to be supplied from the coal pulverizers 13 is adjusted by the dampers 15.

Incidentally, a total flow rate of the secondary air supplied into the furnace 11 is adjusted (controlled) based on an amount of the pulverized coal controlled based on a load of the boiler 10. Here, the "total flow rate of combustion air supplied into the furnace 11" means a flow rate of all airs (primary air, burner secondary air and air supply port secondary air) supplied into the furnace 11.

The six air supply ports 3 are provided on a vertical-direction upper side of the twelve burners 2 and on the lower side of the position of the furnace outlet portion 110 in the front wall 111 of the furnace 11. That is, the furnace outlet portion 110 is positioned on a vertical-direction upper side of the six air supply ports 3. The six air support ports 3 have four main ports 301 arranged side by side and disposed along the width direction, and two sub ports 302 disposed on widthwise opposite sides of the four main ports 301.

Incidentally, the vertical-direction positions of the four main ports 301 are on an upper side of the vertical-direction positions of the two sub ports 302. That is, in the vertical direction, the two sub ports 302 are positioned between the four main ports 301 and the four upper stage burners 21. The overall configuration of the air supply ports 3 including those on the rear wall 112 side of the furnace 111 will be described later.

An amount of the air supply port secondary air delivered from the air preheater 104 to each air supply port 3 is adjusted by an increases/decrease of the opening of the corresponding secondary air damper 42. Thus, a supply amount of the air supply port secondary air supplied from the air supply port 3 into the furnace 11 is adjusted.

Specifically, based on a flow rate control command value which is sent from the control device 90 in order to control a flow rate of the air supply port secondary air, the secondary air damper 42 adjusts the flow rate of the air supply port secondary air delivered to each air supply port 3. The control command value serves for controlling the flow rate of the air supply port secondary air optimally in order to minimize a residual unburnt component in the furnace 11. The control command value is determined in consideration of a value (an actual value) of gas concentration measured in the measurement unit 5 with respect to a set value (designed value) of the flow rate of the air supply port secondary air set based on a flow rate of the pulverized coal supplied into the furnace 11.

As shown in FIG. 1 and FIG. 3, an air flowmeter 41 is provided for measuring whether or not the flow rate based on the control command value issued from the control device 90 actually flows in a flow path for supplying the air supply port secondary air into the furnace 11.

In the present embodiment, the kind of the gas measured in the measurement unit 5 is oxygen (O₂). However, the kind of the gas for knowing the degree of progress of combustion in the furnace 11 is not limited to oxygen (O₂) but may be, for example, carbon dioxide (CO₂). However, when concentration of oxygen (O₂) acting on combustion acceleration is measured in the measurement unit 5, excess or deficiency of air in the furnace 11 can be grasped more directly and more easily.

Various measurement ends or various control ends are provided in the thermal power plant, as partially shown in FIG. 1. For example, the various measurement ends or the various control ends include a stoker (not shown) making control to measure a supply amount of coal supplied to each coal pulverizers 13, and, at the same time, supply a predetermined amount of coal to the coal pulverizer 13, a primary air outlet temperature measuring instrument 44 for detecting temperature of primary air at an outlet of the coal pulverizer 13, a primary air inlet temperature measuring instrument 45 for detecting the temperature of the primary air at an inlet of the coal pulverizer 13, etc. The various measurement ends or the various control ends are electrically connected to the control device 90, as designated by a broken line.

The control device 90 includes a control circuit portion executing control, an interface portion receiving/transmitting a measurement signal or a control signal, and a storage portion etc. storing a portion of the measurement signal for a short time.

### <Correlation between O₂ Concentration and Unburnt component>

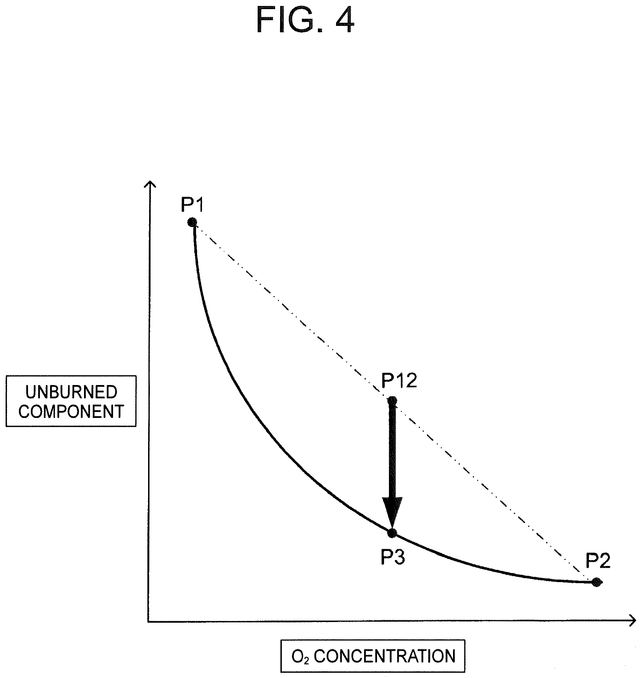

Here, a correlation between O₂ concentration and an unburnt component in the furnace 11 will be described with reference to FIG. 4.

FIG. 4 is a graph showing the relation between the O₂ concentration and the unburnt component.

As the O₂ concentration in the furnace 11 increases, combustion in the furnace 11 is accelerated. Therefore, the unburnt component is reduced. In this case, the correlation between the O₂ concentration and the unburnt component is not simply proportional as designated by a two-dot chain line in FIG. 4, but has a characteristic (a curve designated by a solid line in FIG. 4) that the unburnt component suddenly decreases as the O₂ concentration increases in a low O₂ concentration area. In other words, the correlation between the O₂ concentration and the unburnt component indicates a relation in which the unburnt component suddenly increases as the O₂ concentration becomes lower than a predetermined value.

Accordingly, when the flow rate of the air supply port secondary air is adjusted to increase the O₂ concentration in the low O₂ concentration area (P1 in FIG. 4) or the flow rate of the air supply port secondary air is adjusted to decrease the O₂ concentration in a high O₂ concentration area (P2 in FIG. 4), the unburnt component (P3 in FIG. 4) is smaller than an average (P12 in FIG. 4) between an unburnt component in the low O₂ concentration area and an unburnt component in the high O₂ concentration area.

Accordingly, when the flow rate of the air supply port secondary air supplied from each air supply port 3 is adjusted based on the characteristic of the correlation between the O₂ concentration and the unburnt component, the unburnt component can be minimized. In addition, the O₂ concentration is measured in the measurement area 50 on the horizontal section of the furnace outlet portion 110 where mixture of the combustion gas in the furnace 11 has proceeded. Accordingly, after a state in which combustion of the pulverized coal in the furnace 11 has been completed is reflected accurately, the flow rate of the air supply port secondary air can be adjusted.

### <Measurement Method of O₂ Concentration>

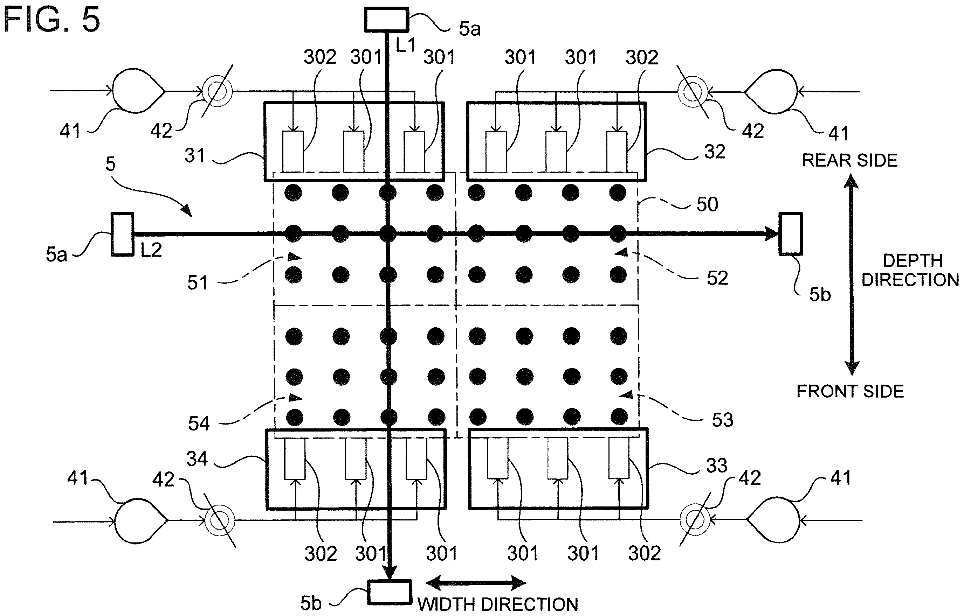

Next, a measurement method of O₂ concentration in the measurement area 50 of the furnace outlet portion 110 will be described with reference to FIG. 5.

FIG. 5 is a schematic view showing the relation between the configuration of the plurality of air supply ports 3 and the configuration of the measurement area 50, and the measurement method of the O₂ concentration in the measurement area 50.

In the present embodiment, the plurality of air supply ports 3 are divided into four groups, i.e. a first group 31, a second group 32, a third group 33 and a fourth group 34, each of which is surrounded by a thick line, as shown in FIG. 5. Two main ports 301 and one sub port 302 are included in each of the first group 31, the second group 32, the third group 33 and the fourth group 34. The air flowmeter 41 and the secondary air damper 42 are provided correspondingly for each of the groups.

The measurement area 50 is divided in advance into four divided areas (a first divided area 51, a second divided area 52, a third divided area 53, and a fourth divided area 54) correspondingly to the four divided groups respectively. In the present embodiment, the measurement area 50 shaped like a rectangle is halved in the width direction, and halved in the depth direction. Thus, the measurement area 50 is equally divided into four rectangular areas, i.e. the first divided area 51, the second divided area 52, the third divided area 53 and the fourth divided area 54.

The first divided area 51 is associated with the first group 31. Based on a value of O₂ concentration measured in the first divided area 51, it is possible to determine a relative value (size) of a flow rate of air supply port secondary air actually supplied into the furnace 11 from the air supply ports 3 belonging to the first group 31. In a similar manner or the same manner, the second divided area 52, the third divided area 53 and the fourth divided area 54 are associated with the second group 32, the third group 33 and the fourth group 34 respectively.

Accordingly, in the present embodiment, the number of the groups of the air supply ports 3 and the number of the divided areas are the same (four), and the groups 31 to 34 and the divided areas 51 to 54 have one-to-one correspondence with each other respectively.

Thus, based on values of O₂ concentrations actually measured in the first divided area 51, the second divided area 52, the third divided area 53, and the fourth divided area 54 respectively, determination is made as to whether the O₂ concentration in each divided area 51 to 54 is high or low, so as to optimally control a flow rate of air supply port secondary air supplied by the air supply ports 3 (the main ports 301 and the sub port 302) belonging to each group 31 to 34 associated with the divided area 51 to 54. A control method thereof will be described later.

According to an embodiment, the O₂ concentrations may be measured using laser beams. Specifically, the measurement unit 5 has laser light sources 5a, and reception portions 5b. The laser light sources 5a emit laser beams (e.g. designated by arrows L1 and L2 in FIG. 5) intersecting with one another on the measurement area 50. The reception portions 5b receive the laser beams emitted from the laser light sources 5a. The measurement unit 5 measures O₂ concentrations of optical paths (paths passing through the inside of the furnace 11) of the laser beams based on transmittances of the optical paths, and applies tomographic technology thereto to output the O₂ concentrations at intersection points of the optical paths (each of which is designated by a black circular mark in FIG. 5).

In FIG. 5, the laser beams are emitted from the laser light sources 5a respectively so that the laser beams (the arrow L1) extending along the depth direction and the laser beams (the arrow L2) extending along the width direction are intersected with each other orthogonally and respectively, and intersection points (black circular marks) of the laser beams are output points of local O₂ concentrations. In the present embodiment, the measurement area 50 has forty-eight output points in total, and the total number of optical paths of the laser beams (the total number of laser paths) is fourteen. The fourteen paths consist of eight paths for transmission in the depth direction and six paths for transmission in the width direction.

In this manner, information about the gas concentrations at the forty-eight output points can be obtained by use of the laser light sources 5a and the reception portions 5b transmitting and receiving the laser beams of the fourteen paths. Accordingly, the O₂ concentrations can be measured efficiently. Incidentally, gas concentrations of the divided areas 51 to 54 may be outputted directly without the necessity of always obtaining the information about the gas concentrations by use of the output values of the intersection points between the laser beams.

In addition, the measurement method of the O₂ concentrations does not have to be always performed by use of the laser beams. For example, a water-cooled probe may be inserted into the furnace 11 to directly measure any place on the measurement area 50. However, by the measurement method using the laser beams, the O₂ concentrations can be measured without inserting any measurement instrument or any measurement device into the high temperature furnace 11. Accordingly, the measurement method is also advantageous in the aspect of durability. Further, since a problem such as deposition of ash on the measurement unit can be also avoided, the measurement method is also advantageous in the aspect of reliability. That is, the measurement method using the laser beams is often advantageous in the aspects of economic efficiency, durability, and reliability.

Incidentally, the laser light source 5a and the reception portion 5b are provided for each of the laser beams in FIG. 5. However, it is not necessary to be always like that, and the configuration of the laser light sources 5a and the reception portions 5b is not limited particularly.

According to an embodiment, a measured value in the measurement unit 5 may be a value obtained by averaging O₂ concentrations measured a plurality of times in the measurement area 50 (the first to fourth divided areas 51 to 54) in a predetermined time. In this case, a more stable value than a value of O₂ concentration obtained when each measurement point is measured once in a certain time can be used as the measured value.

### <About Control of Flow Rates of Air Supply Port Secondary Air>

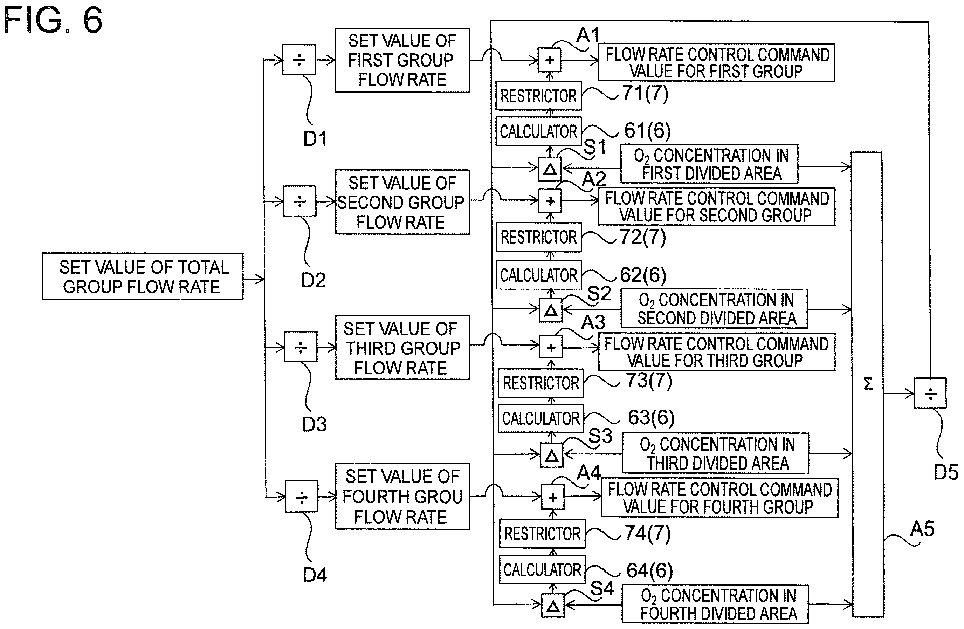

Next, control of the flow rates of the air supply port secondary air supplied from the plurality of air supply ports 3 will be described with reference to FIG. 6.

FIG. 6 is a conceptual view showing control methods of the flow rates of the air supply port secondary air supplied from the plurality of air supply ports 3.

The flow rates of the air supply port secondary air supplied from the plurality of air supply ports 3 are controlled based on control command values issued from the control device 90. The control device 90 includes a function of calculating a set value of a flow rate for each group, a function of calculating a total value of O₂ concentration in the whole measurement area 50, a function of calculating an average value of O₂ concentration in the whole measurement area 50, a function of calculating a deviation between the average value of the O₂ concentration in the whole measurement area 50 and an average value of O₂ concentration in each of the divided areas 51 to 54, and a function of calculating a flow rate control command value for each group in consideration of the deviation with respect to the set value of the flow rate for the group.

The respective functions will be described below specifically. Incidentally, the control methods of the flow rates of the air supply port secondary air in the first group 31, the second group 32, the third group 33 and the fourth group 34 are similar or the same. Therefore, the control method of the flow rate of the air supply port secondary air in the first group 31 will be mainly described by way of example.

As shown in FIG. 6, a set value of a total flow rate of air supply port secondary air supplied from the plurality of air supply ports 3 into the furnace 11 is inputted to a first divider D1 in advance. The first divider D1 divides the inputted set value of the total flow rate of the air supply port secondary air by the number of the groups (four groups in the present embodiment) to obtain an average value. Accordingly, the first divider D1 determines a set value of a first group flow rate, i.e. a set value of a flow rate of the air supply port secondary air for the first group 31.

Next, average values of O₂ concentrations (average values of actually measured values) in the first divided area 51, the second divided area 52, the third divided area 53 and the fourth divided area 54 respectively are inputted to a total value calculator A5. The total value calculator A5 sums up the inputted average values of the O₂ concentrations in the first divided area 51, the second divided area 52, the third divided area 53 and the fourth divided area 54 respectively, to thereby calculate a total value of O₂ concentration in the whole measurement area 50.

The calculated total value of the O₂ concentration in the whole measurement area 50 is inputted to a fifth divider D5. The fifth divider D5 divides the inputted total value of the O₂ concentration in the whole measurement area 50 by the number of the divided areas (four areas in the present embodiment) to thereby calculate an average value of O₂ concentration in the whole measurement area 50.

The average value of the O₂ concentration in the whole measurement area 50 and the average value of the O₂ concentration in the first divided area 51 are inputted to a first subtractor S1. The first subtractor S1 calculates a deviation between the average value of the O₂ concentration in the whole measurement area 50 and the average value of the O₂ concentration in the first divided area 51.

Thus, it is possible to grasp how much higher or lower the average value of the O₂ concentration in the first divided area 51 is than the average value of the O₂ concentration in the whole measurement area 50. Accordingly, it is possible to determine whether the flow rate of the air supply port secondary air supplied from the air supply ports 3 belonging to the firsts group 31 associated with the first divided area 51 is higher or lower.

A calculation portion 6 calculates a correction amount for the flow rate of the air supply port secondary air from the calculated deviation of the O₂ concentration. Specifically, the calculation portion 6 sets the deviation from the set value as a negative value when the flow rate of the air supply port secondary air is higher, and sets the deviation from the set value as a positive value when the flow rate of the air supply port secondary air is lower. Thus, the calculation portion 6 converts the deviation of the O₂ concentration into an air flow rate to thereby calculate the correction amount.

The thus obtained correction amount for the flow rate of the air supply port secondary air and the set value of the flow rate of the air supply port secondary air in the first group 31 are inputted to a first adder A1. The first adder A1 adds the correction amount for the flow rate of the air supply port secondary air to the set value of the first group flow rate to thereby output the resulting sum as a flow rate control command value of the air supply port secondary air in the first group 31. The secondary air damper 42 adjusts the flow rate of the air supply port secondary air supplied to the air supply ports 3 belonging to the first group 31 based on the flow rate control command value of the air supply port secondary air in the first group 31.

The functions of the first divider D1, the first subtractor S1 and the first adder A1 associated with the first group 31 and the first divided area 51 have been described above. A second divider D2, a second subtractor S2 and a second adder A2 associated with the second group 32 and the second divided area 52 have similar or the same functions. A third divider D3, a third subtractor S3 and a third adder A3 associated with the third group 33 and the third divided area 53 have similar or the same functions. A fourth divider D4, a fourth subtractor S4 and a fourth adder A4 associated with the fourth group 34 and the fourth divided area 54 have similar or the same functions.

Thus, the flow rate control command value of the air supply port secondary air can be obtained if only the deviation between the average value of the O₂ concentration in the whole measurement area 50 and the average value of the O₂ concentration in each of the divided areas 51 to 54 is calculated. Accordingly, measurement of the O₂ concentration can be performed on the group basis and calculation of the deviation can be performed on the group basis. The flow rate of the air supply port secondary air supplied into the furnace 11 may be also adjusted on the group basis.

In the furnace 11, a local fluctuation of combustion occurs due to fluctuation of distribution of a flow rate of fuel (the pulverized coal) or distribution of a flow rate of air to cause divergence from an optimal combustion state. It is extremely difficult to locally correct the fluctuation of the combustion in real time not only from the aspect of detection of the fluctuation but also from the aspect of adjustment of optimal distribution of the air.

However, when the inside of the furnace 11 is roughly divided into the groups, the sum of the local fluctuations of combustion substantially corresponds to fluctuation in each group. The fluctuation of combustion in each group is more stable than the local fluctuation of combustion. Accordingly, detection of the fluctuation in each group and adjustment of distribution of the air for each group can be relatively easily performed.

Accordingly, in the present embodiment, the inside of the furnace 11 is divided into the groups, and distribution of the flow rate of the air supply port secondary air to each group is optimized based on the measured value of the O₂ concentration for the group. Therefore, as a means for optimally suppressing the unburnt component in the furnace 11, the manner according to the present embodiment is easily put into practical use in an actually working boiler 10, to thereby also improve efficiency of the boiler 10.

Incidentally, generally as the deviation between the average value of the O₂ concentration in the whole measurement area 50 and the average value of the O₂ concentration in each of the divided areas 51 to 54 is smaller, it is easier to achieve equilibrium of the degree of combustion of the pulverized coal in the furnace 11. Accordingly, it is desirable that the flow rate of the air supply port secondary air is adjusted to thereby bring the deviation close to zero.

However, combustion proceeds excellently due to a mixture state etc. of combustion gas on the upstream side of the measurement area 50 so that an area where O₂ concentration decreases may be present. In such a case, an excessive increase of air into the area where the O₂ concentration decreases is not required.

Thus, when there is a difference in a condition about mixture etc. which generates a deviation in combustion acceleration on the upstream side of the measurement area 50, a positive or negative bias value can be set in advance for the deviation between the average value of the O₂ concentration in the whole measurement area 50 and the average value of the O₂ concentration in each of the divided areas 51 to 54 to thereby adjust distribution of air optimally according to the upstream side condition of the measurement area 50.

The difference in the condition about mixture etc. which generates the deviation in combustion acceleration on the upstream side of the measurement area 50 often changes due to a load of the combustion device 12 or due to patterns of used burners 2 of the plurality of burners 2. Here, the phrase "patterns of used burners 2 of the plurality of burners 2" means that the plurality of burners 2 have use patterns because the stages of the burners 2 in a use state change due to operating states of the plurality of coal pulverizers 13, as described above.

The positive or negative bias value is set in the aforementioned calculation portion 6 (each of first to fourth calculation portions 61 to 64). The deviation between the average value of the O₂ concentration in the whole measurement area 50 and the average value of the O₂ concentration in each of the divided areas 51 to 54, to which the positive or negative bias value set by the calculation portion 6 has been added, is converted into a correction amount for the flow rate of the air supply port secondary air and then inputted to the adder A (each of the first to fourth adders A1 to A4).

Specifically, the positive bias value is added to an area where mixture of combustion gas is apt to proceed, to thereby increase an average value of O₂ concentration measured in the measurement area correspondingly to the aforementioned area. The negative bias value is added to an area where mixture of combustion gas is difficult to proceed, to thereby lower an average value of O₂ concentration measured in the measurement area correspondingly to the aforementioned area.

It is because, as the mixture of the combustion gas and the combustion proceeds, there is a fear that the O₂ concentration may be lowered gradually to be misjudged as shortage of air in the state as it is. Accordingly, it is necessary to add the positive bias value to the area where the mixture of the combustion gas and the combustion are apt to proceed so that it is possible to correctly judge that the air is sufficient. The case where the mixture of the combustion gas and the combustion are difficult to proceed is opposite to the case where the mixture of the combustion gas and the combustion are apt to proceed.

In addition, in the present embodiment, a restrictor 7 (each of first to fourth restrictors 71 to 74) is provided to place restriction when the calculated correction amount for the flow rate of the air supply port secondary air is excessively large. Thus, even when abnormality occurs in the control based on the O₂ concentration, the flow rate of the air supply port secondary air can be controlled in a predetermined proper range. As a result, no abnormality is caused to the boiler 10 so that the boiler 10 can be operated safely.

Incidentally, the present invention is not limited to the aforementioned embodiment but may include various modifications. For example, the aforementioned embodiment has been described in detail in order to describe the present invention in a way easy to understand. However, the present invention is not always limited to the configuration having all the constituent members which have been described above.

In the aforementioned embodiment, the boiler 10 is an opposed combustion type boiler. The boiler 10 may be a swirling combustion type boiler when a correlation between change of a flow rate of air supply port secondary air supplied from a predetermined position and change of a value of O₂ concentration in the furnace outlet portion 110 is known.

In the aforementioned embodiment, the plurality of air supply ports 3 are divided into the four groups. The measurement area 50 is divided in advance into the four divided areas 51 to 54 associated with the groups of the air supply ports 3 correspondingly and respectively. However, the number of the groups and the number of the divided areas do not always have to be four. It may go well as long as at least the plurality of air supply ports 3 are divided into two or more groups, and the measurement area 50 is divided in advance into a plurality of divided areas associated with the divided groups correspondingly and respectively.

In the aforementioned embodiment, the deviation is calculated by use of the average value of the O₂ concentration (the average value of the actually measured value) in each of the first divided area 51, the second divided area 52, the third divided area 53 and the fourth divided area 54. However, it is not always necessary to use the average value.

### REFERENCE SIGNS LIST

- 2: burner
- 3: air supply port
- 5: measurement unit
- 5a: laser light source
- 5b: reception portion
- 11: furnace
- 12: combustion device
- 13: coal pulverizer
- 31 to 34: first to fourth groups
- 42: secondary air damper
- 50: measurement area
- 51 to 54: first to fourth divided areas
- 90: control device
- 110: furnace outlet portion
- 111, 112: front wall, rear wall (wall)
- 131, 132, 133: first to third coal pulverizers
- L1, L2: laser beam

## Claims

1. A combustion device (12) comprising:
a plurality of burners (2) that are provided in a wall (111,112) of a furnace (11) disposed along a vertical direction and that are configured to supply fuel, primary air and burner secondary air into the furnace (11);
a plurality of air supply ports (3) that are provided on a vertical-direction upper side of the plurality of burners (2) in the wall (111,112) of the furnace (12) and that are configured to supply air supply port secondary air into the furnace (11);
a plurality of secondary air dampers (42) that are configured to adjust flow rates of the air supply port secondary air;
a measurement unit (5) that is configured to measure gas concentration in a measurement area (50) on a horizontal section of a furnace outlet portion (110) positioned on a vertical-direction upper side of the plurality of air supply ports (3) in the furnace (11); and
a control device (90) that has a circuit configured to output flow rate control command values for adjusting openings of the plurality of secondary air dampers (42) respectively; wherein:
the plurality of air supply ports (3) are divided into two or more groups (31-34);
the measurement area (50) is divided in advance into a plurality of divided areas (51-54) associated with the divided groups (31-34) correspondingly and respectively; and
the control device (90) is configured to calculate deviations between an average value of a gas concentration in the whole measurement area (50) and values of gas concentrations in the respective divided areas (51-54) of the measurement area (50), and to output, to the plurality of secondary air dampers (42) respectively, the flow rate control command values for the air supply port secondary air to be supplied to the air supply ports (3) belonging to the groups (31-34) associated with the divided areas (51-54) correspondingly and respectively, such that residual unburnt combustible content is suppressed, wherein the output is based on values each obtained by adding, to a corresponding one of the calculated deviations, a positive or negative bias value calculated based on a load of the combustion device (12) and patterns of used burners (2) of the plurality of burners (2).

2. A combustion device (12) according to Claim 1, wherein:
the plurality of air supply ports (3) are divided into four groups (31-34); and
the measurement area (50) is divided in advance into the four divided areas (51-54) associated with the divided groups (31-34) correspondingly and respectively.

3. A combustion device (12) according to Claim 1 or 2, wherein:
the kind of gas measured in the measurement unit (5) is oxygen.

4. A combustion device (12) according to any one of Claims 1 through 3, wherein:
the control device (90) is configured to output the flow rate control command values for the air supply port second air to the plurality of secondary air dampers (42) respectively to thereby bring the deviations between the average value of the gas concentration in the whole measurement area (50) and the respective values of the gas concentrations in the divided areas (31-34) close to zero.

5. A combustion device (12) according to any one of Claims 1 through 4, wherein:
a value obtained by averaging gas concentrations measured a plurality of times in the measurement area (50) within a predetermined time by the measurement unit (5) is used as a measured value.

6. A combustion device (12) according to any one of Claims 1 through 5, wherein:
the measurement unit (5) has laser light sources (5a) and reception portions (5b) configured to transmit and receive a plurality of laser beams (L) intersecting with each other respectively on the measurement area (50), so that the measurement unit (5) is configured to measure gas concentrations based on transmittances of the plurality of laser beams (L) and to output the gas concentrations at intersection points of the plurality of laser beams (L) or in the divided areas (51-54) by use of tomographic technology.

7. A boiler (10) comprising:
a combustion device (12) according to any one of Claims 1 through 6.

## Patentansprüche

1. Eine Verbrennungsvorrichtung (12), umfassend:
eine Mehrzahl von Brennern (2), die in einer Wand (111,112) eines Kessels (11) vorgesehen sind, die entlang einer vertikalen Richtung angeordnet ist, und die konfiguriert sind, um Brennstoff, Primärluft und Brenner-Sekundärluft in den Ofen (11) zuzuführen,
eine Mehrzahl von Luftzufuhröffnungen (3), die an einer in vertikaler Richtung oberen Seite der Mehrzahl von Brennern (2) in der Wand (111,112) des Ofens (12) vorgesehen sind und die konfiguriert sind, um Luftzufuhröffnungs-Sekundärluft in den Ofen (11) zuzuführen,
eine Vielzahl von Sekundärluftklappen (42), die konfiguriert sind, um die Durchflussraten der Sekundärluft der Luftzufuhröffnung einzustellen,
eine Messeinheit (5), die konfiguriert ist, um eine Gaskonzentration in einem Messbereich (50) an einem horizontalen Abschnitt eines Ofenauslassabschnitts (110) zu messen, der an einer in vertikaler Richtung oberen Seite der Mehrzahl von Luftzufuhröffnungen (3) in dem Ofen (11) positioniert ist, und
eine Steuervorrichtung (90), die eine Schaltung aufweist, die konfiguriert ist, um Strömungsraten-Steuerbefehlswerte zum Einstellen von Öffnungen der Mehrzahl von Sekundärluftklappen (42) auszugeben, wobei:
die Mehrzahl von Luftzufuhröffnungen (3) in zwei oder mehr Gruppen (31-34) unterteilt ist,
der Messbereich (50) im Voraus in eine Vielzahl von unterteilte Bereiche (51-54) unterteilt ist, die den unterteilten Gruppen (31-34) entsprechend und jeweils zugeordnet sind, und
die Steuervorrichtung (90) konfiguriert ist, um Abweichungen zwischen einem Durchschnittswert einer Gaskonzentration in dem gesamten Messbereich (50) und Werten von Gaskonzentrationen in den jeweiligen unterteilten Bereichen (51-54) des Messbereichs (50) zu berechnen und an die Mehrzahl von Sekundärluftklappen (42) jeweils die Strömungsraten-Steuerungsbefehlswerte für die Luftzufuhranschluss-Sekundärluft auszugeben, die den Luftzufuhranschlüssen (3) zuzuführen ist, die zu den Gruppen (31-34) gehören, die den unterteilten Bereichen (51-54) entsprechend und jeweils zugeordnet sind, so dass restlicher unverbrannter brennbarer Inhalt verringert bzw. vermindert wird, wobei die Ausgabe auf Werten basiert, die jeweils erhalten werden, indem zu einer entsprechenden der berechneten Abweichungen ein positiver oder negativer Vorgabewert addiert wird, der auf der Grundlage einer Last der Verbrennungsvorrichtung (12) und von Mustern verwendeter Brenner (2) der Mehrzahl von Brennern (2) berechnet wird.

2. Eine Verbrennungsvorrichtung (12) nach Anspruch 1, wobei:
die Mehrzahl von Luftzufuhröffnungen (3) in vier Gruppen (31-34) unterteilt sind, und
der Messbereich (50) im Voraus in die vier unterteilten Bereiche (51-54) unterteilt ist, die den unterteilten Gruppen (31-34) entsprechend unf jeweils zugeordnet sind.

3. Eine Verbrennungsvorrichtung (12) nach Anspruch 1 oder 2, wobei:
die in der Messeinheit (5) gemessene Gasart Sauerstoff ist.

4. Eine Verbrennungsvorrichtung (12) nach einem der Ansprüche 1 bis 3, wobei:
die Steuervorrichtung (90) konfiguriert ist, um die Strömungsraten-Steuerungsbefehlswerte für die Luftzufuhranschluss-Sekundärluft jeweils an die Mehrzahl von Sekundärluftklappen (42) auszugeben, um dadurch die Abweichungen zwischen dem Durchschnittswert der Gaskonzentration im gesamten Messbereich (50) und den jeweiligen Werten der Gaskonzentrationen in den unterteilten Bereichen (31-34) nahe Null zu bringen.

5. Eine Verbrennungsvorrichtung (12) nach einem der Ansprüche 1 bis 4, wobei:
als Messwert ein Wert verwendet wird, der durch Mittelung von Gaskonzentrationen erhalten wird, die mehrere Male in dem Messbereich (50) innerhalb einer vorgegebenen Zeit von der Messeinheit (5) gemessen wurden.

6. Eine Verbrennungsvorrichtung (12) nach einem der Ansprüche 1 bis 5, wobei:
die Messeinheit (5) Laserlichtquellen (5a) und Empfangsabschnitte (5b) aufweist, die konfiguriert sind, um eine Mehrzahl von Laserstrahlen (L), die sich an dem Messbereich (50) kreuzen, auszusenden und zu empfangen, so dass die Messeinheit (5) konfiguriert ist, um Gaskonzentrationen auf der Grundlage von Transmissionswerten der Mehrzahl von Laserstrahlen (L) zu messen und die Gaskonzentrationen an Kreuzungspunkten der Mehrzahl von Laserstrahlen (L) oder in den unterteilten Bereichen (51-54) unter Verwendung einer tomographischen Technologie auszugeben.

7. Ein Kessel (10) umfassend:
eine Verbrennungsvorrichtung (12) nach einem der Ansprüche 1 bis 6.

## Revendications

1. Dispositif (12) de combustion comprenant :
une pluralité de brûleurs (2) qui sont prévus dans une paroi (111, 112) d'un four (11) disposés suivant une direction verticale et qui sont configurés pour envoyer du combustible, de l'air primaire et de l'air secondaire de brûleur au four (11) ;
une pluralité d'orifices (3) d'alimentation en air, qui sont prévus sur un côté supérieur dans la direction verticale de la pluralité de brûleurs (2) dans la paroi (111, 112) du four (12) et qui sont configurés pour envoyer de l'air secondaire d'orifices d'alimentation en air dans le four (11) ;
une pluralité de registres (42) d'air secondaire, qui sont configurés pour régler des débits de l'air secondaire d'orifices d'alimentation en air ;
une unité (5) de mesure qui est configurée pour mesurer une concentration de gaz dans une zone (50) de mesure sur une section horizontale d'une partie (110) de sortie de four placée sur un côté supérieur dans la direction verticale de la pluralité d'orifices (3) d'alimentation en air dans le four (11) ; et
un dispositif (90) de commande, qui a un circuit configuré pour sortir des valeurs d'instruction de commande de débit pour régler des ouvertures de la pluralité de registres (42) d'air secondaire respectivement; dans lequel :
la pluralité d'orifices (3) d'alimentation en air est subdivisée en deux ou plusieurs groupes (31 à 34) ;
la zone (50) de mesure est subdivisée à l'avance en une pluralité de zones (51 à 54) subdivisées associées aux groupes (31 à 34) subdivisé en y correspondant et respectivement ; et
le dispositif (90) de commande est configuré pour calculer des écarts entre une valeur moyenne d'une concentration de gaz dans toute la zone (50) de mesure et des valeurs de concentration de gaz dans les zones (51 à 54) subdivisées respectives de la zone (50) de mesure et pour sortir, vers la pluralité de registres (42) d'air secondaire respectivement, les valeurs d'instruction de commande de débit pour l'air secondaire d'orifices d'alimentation en air à envoyer aux orifices (3) d'alimentation en air appartenant aux groupes (31 à 34) associés aux zones (51 à 54) subdivisées correspondantes et respectivement, de manière à supprimer la teneur en combustible résiduel non brûlé, dans lequel la sortie repose sur des valeurs obtenues chacune en ajoutant à l'un correspondant des écarts calculés une valeur de correction positive ou négative calculée sur la base d'une charge du dispositif (12) de combustion et des configurations de brûleurs (2) utilisés de la pluralité de brûleurs (2).

2. Dispositif de combustion suivant la revendication 1, dans lequel :
la pluralité d'offices (3) d'alimentation en air sont subdivisés en quatre groupes (31 à 34) ; et
la zone (50) de mesure est subdivisée à l'avance en les quatre zones (51 à 54) subdivisées, associée aux groupes (31 à 34) subdivisés d'une manière correspondante et respectivement.

3. Dispositif de combustion suivant la revendication 1 ou 2, dans lequel :
la nature du gaz mesuré dans l'unité (5) de mesure est l'oxygène.

4. Dispositif de combustion suivant l'une quelconque des revendications 1 à 3, dans lequel :
le dispositif (90) de commande est configuré pour sortir les valeurs d'instruction de commande de débit pour l'air secondaire d'orifices d'alimentation en air à la pluralité de registres (42) d'air secondaire respectivement pour mettre à une valeur proche de zéro les écarts entre la valeur moyenne de la concentration de gaz dans toute la zone (50) de mesure et les valeurs respectives des concentrations de gaz dans les zones (31 à 34) subdivisées.

5. Dispositif de combustion suivant l'une quelconque des revendications 1 à 4, dans lequel :
une valeur obtenue en faisant une moyenne des concentrations de gaz mesurées à une pluralité de temps dans la zone (50) de mesure dans un temps déterminé à l'avance par l'unité (5) de mesure est utilisée comme valeur mesurée.

6. Dispositif de combustion suivant l'une quelconque des revendications 1 à 5, dans lequel :
l'unité (5) de mesure a des sources (5a) de lumière laser et des parties (5b) de réception configurées pour émettre et recevoir une pluralité de faisceaux (L) laser en intersection les uns avec les autres respectivement sur la zone (50) de mesure de manière à ce que l'unité (5) de mesure soit configurée pour mesurer des concentrations de gaz sur la base de coefficient de transmission de la pluralité de faisceaux (L) laser et pour sortir les concentrations de gaz aux points d'intersection de la pluralité de faisceaux (L) laser ou dans les zones (51 à 54) subdivisées par utilisation d'une technologie tomographique.

7. Chaudière (10) comprenant :
un dispositif (12) de combustion suivant l'une quelconque des revendications 1 à 6.
